# EUROPÄISCHE PATENTSCHRIFT

(11) **EP 0 897 939 B1**
(45) Veröffentlichungstag und Bekanntmachung des Hinweises auf die Patenterteilung: **22.02.2006**
(21) Anmeldenummer: 98114862.0
(22) Anmeldetag: 07.08.1998
(51) Int. Cl.: C08F 265/06, C08F 259/02, C08F 291/00

(54) **Verfahren zur Herstellung von kugelförmigen Polymerisaten**
Process for preparation of spherical polymers
Procédé de préparation de polymères sphériques

(30) Priorität: 20.08.1997 DE 19736094
(43) Veröffentlichungstag der Anmeldung: 24.02.1999
(73) Patentinhaber: AGFA-GEVAERT N.V., 2640 Mortsel (BE)
(72) Erfinder: Podszun, Wolfgang, Dr., 51061 Köln (DE); Krüger, Joachim, 40789 Monheim (DE); Halle, Olaf, Dr., 51061 Köln (DE); Louwet, Frank, Dr., 3590 Diepenbeek (BE)

(56) Entgegenhaltungen:
- EP-A- 0 173 789
- EP-A- 0 288 006
- EP-A- 0 417 539

## Beschreibung

Die Erfindung betrifft die Herstellung von kugelförmigen Polymerisaten mit einer mittleren Teilchengröße von 1 bis 30 µm durch ein Saat-Zulauf-Verfahren.

Kugelförmige Polymerisate mit einer mittleren Teilchengröße von 1 bis 30 µm werden vielfältig angewendet, z.B. als Abstandshalter für Filmmaterialien, als Träger für Katalysatoren, als Eichsubstanzen für Lichtstreuungsmessungen oder als Ausgangsmaterialien für Chromatographieharze und Ionenaustauscher. Für viele Anwendungen werden Polymerisate mit möglichst einheitlicher Teilchengröße gewünscht (im folgenden "monodispers" genannt).

Zur Herstellung von Polymerisaten mit mittleren Teilchengrößen <1 µm, insbesondere für Teilchen von 20 bis 500 nm, ist die Emulsionspolymerisation eine gut geeignete Methode. Polymerisate mit Teilchengrößen von 30 bis ca. 1.000 µm können mittels Suspensionspolymerisation erzeugt werden. Zur Herstellung von Polymerisaten mit mittleren Teilchengrößen von 1 bis 30 µm gibt es dagegen keine einfachen Direktsynthesen.

Mit Hilfe von Vielstufen-Synthesen ist es ausgehend von monodispersen Emulsionspolymerisatteilchen als Saat gelungen, Polymerisate mit Teilchengrößen von einigen µm und enger Teilchengrößenverteilung herzustellen. Diese Vielstufensynthesen sind allerdings schwierig durchzuführen und wenig wirtschaftlich.

Polymerdispersionen mit monodispersen Teilchen zwischen 3 und 10 µm können gemäß EP 0 399 729 dadurch hergestellt werden, daß zu einer Saat ein ethylenisch ungesättigtes Monomer zugesetzt wird, das einen anderen Brechungsindex besitzt als das Monomer, das zur Herstellung der Saat verwendet wird. Bei diesem Verfahren wird das zugesetzte Monomer in kleinen Portionen zugesetzt, wobei zwischen den Zugaben Pausen notwendig sind, in denen das zugesetzte Monomer durch Polymerisation abreagieren kann.

In EP 448 391 wird ein Verfahren beschrieben, bei dem einheitliche Polymerpartikel mit einer Teilchengröße von 1 bis 50 µm dadurch erzeugt werden, daß ein Monomerstrom zu einer wäßrigen Dispersion von Saat-Partikeln in Anwesenheit eines Dispersionsstabilisators und eines öllöslichen Initiators bei einer Temperatur, bei der der Initiator aktiv ist, über einen Zeitraum von 45 bis 120 Minuten zugesetzt wird.

Eine Schwierigkeit der bekannten Saat-Zulaufverfahren besteht darin, daß die Menge des eingesetzten Dispersionsstabilisators sehr kritisch ist: zu große Mengen an Dispersionsstabilisator verhindern das Eindringen des Monomers in die Saat, während zu kleine Mengen die Agglomeration der Perlen nicht immer sicher verhindern können. Bei Verwendung größerer Mengen an Schutzkolloid tritt häufig eine neue Teilchengeneration auf, die durch nicht eingequollenes Monomer verursacht wird.

Ein weiterer kritischer Punkt bei den bekannten Saat-Zulauf-Verfahren ist die Geschwindigkeit der Monomerzugabe beim Zulaufschritt. Das Monomer muß in dem Maße zugesetzt werden, wie es durch Quellung und Polymerisation verbraucht wird. Monomer, das nicht rechtzeitig in die Saat eindringt, kann zur Bildung einer neuen Teilchengeneration mit einer unerwünschten Teilchengröße führen.

So entspricht die Kornverteilung der bei den bekannten Saat-Zulauf-Verfahren erhaltenen Perlpolymerisate nicht in allen Fällen der aus der Saat errechenbaren theoretischen Kornverteilung, sondern ist im allgemeinen etwas breiter.

Es besteht ein Bedarf für ein robustes, breit anwendbares Saat-Zulauf-Verfahren, das die geschilderten Nachteile nicht aufweist.

Überraschenderweise wurde gefunden, daß Saat-Zulauf-Verfahren sehr einfach durchzuführen sind und Perlpolymerisate mit einer Teilchengrößenverteilung liefern, die ein exaktes vergrößertes Abbild der eingesetzten Saat darstellen, wenn man als Saat ein mit Si-O-Si- Gruppen vernetztes Polymerisat aus Vinylmonomeren mit einem löslichen Anteil von weniger als 25 Gew.-% und einer mittleren Teilchengröße von 0,5 bis 10 µm einsetzt.

Gegenstand der Erfindung ist also ein Verfahren zur Herstellung von Perlpolymerisaten mit einer mittleren Teilchengröße von 1 bis 30 µm nach dem Saat-Zulauf-Verfahren, dadurch gekennzeichnet, daß man als Saat ein mit Si-O-Si-Gruppen vernetztes Polymerisat aus Vinylmonomeren mit einem löslichen Anteil von weniger als 25 Gew.-% und einer mittleren Teilchengröße von 0,5 bis 10 µm einsetzt.

Das erfindungsgemäße Verfahren umfaßt die folgenden Schritte:
1. Suspendieren eines mit Si-O-Si-Gruppen vernetzten Polymerisats aus Vinylmonomeren mit einem löslichen Anteil von weniger als 25 Gew.-% und einer mittleren Teilchengröße von 0,5 bis 10 µm als Saat in einer wäßrigen kontinuierlichen Phase.
2. Zusatz einer Mischung (Zulauf) aus Monomer, Initiator und gegebenenfalls weiteren Zusätzen zu der entstandenen Saatsuspension vor der Polymerisation, wobei die Mischung in die Saat einquillt.
3. Polymerisation der gequollenen Saat zu Perlpolymerisaten bei erhöhter Temperatur.

Als Saat werden vernetzte, kugelförmige Polymerisate mit einer mittleren Teilchengröße von 0,5 bis 10 µm eingesetzt. Unter vernetzten Polymerisaten im Sinne der Erfindung werden solche Polymerisate verstanden, die in einem guten Lösungsmittel wie Ethylacetat oder Tetrahydrofuran (THF) weitgehend unlöslich sind. Ihr löslicher Anteil beträgt weniger als 25 Gew.-%, vorzugsweise weniger als 20 Gew.-%. Der lösliche Anteil kann durch 6-stündiges Extrahieren mit THF in einem Soxhlet-Extraktor ermittelt werden. Die Saatpolymerisate besitzen einen hohen Quellgrad, damit sie beim Saat-Zulauf Verfahren das zugesetzte Monomer vollständig aufnehmen können. Als Quellungsindex (QI) ist der Quotient aus dem Volumen des gequollenen Polymers und dem Volumen des nicht gequollenen Polymers definiert. Der Quellungsindex erfindungsgemäß geeigneter Polymerisate beträgt 2 bis 30, vorzugsweise 3 bis 15 (gemessen bei 25°C in THF).

Als Saat geeignete vernetzte Polymerisate können beispielsweise durch Emulsionspolymerisation oder Dispersionspolymerisation aus radikalisch polymerisierbaren Monomeren erzeugt werden. Hierfür geeignete Monomere sind monoethylenisch ungesättigte Verbindungen und multiethylenisch ungesättigte Verbindungen, die in der Regel als Vernetzer wirken, sowie deren Mischungen.

Als monoethylenisch ungesättigte Verbindungen sind z.B. Styrol, a-Methylstyrol, Chlorstyrol, Acrylsäureester, Methacrylsäureester, insbesondere Methylmethacrylat, Acrylnitril, Methacrylnitril, Methacrylamid und Vinylacetat geeignet. Als Beispiele für multiethylenisch ungesättigte Verbindungen seien Divinylbenzol, Ethylenglykoldimethacrylat, Butandioldimethacrylat, Allylmethacrylat, Methylen-N,N'-bisacrylamid, Trimethylolpropanatriacrylat, Butadien, Isopren, Octadien-1,7 und Hexadien-1,5 genannt.

Erfindungsgemäß geeignete Saat-Polymerisate sind mit Si-O-Si-Gruppen vernetzte Polymerisate aus Vinylmonomeren mit einem mittleren Teilchendurchmesser im Bereich von 0,5 bis 10 µm, bevorzugt 1 bis 7 µm, und enger Teilchendurchmesserverteilung gemäß EP 417 539.

Die Form der Teilchengrößenverteilungskurve der Saat muß der des gewünschten Endproduktes entsprechen. Zur Herstellung eines engverteilten bzw. monodispersen Perlpolymerisates wird demnach ein engverteiltes bzw. monodisperses vernetztes Polymerisat als Saat verwendet.

Die erfindungsgemäßen Polymerisate besitzen einen um mindestens 20 % größeren Durchmesser als die zu ihrer Herstellung eingesetzten Saatpolymere.

Die erfindungsgemäßen Polymere weisen eine Semi-IPN-Struktur auf, wenn der Zulauf nur monoethylenisch ungesättigte Verbindungen als Monomer enthält bzw. eine IPN-Struktur, wenn zumindestens anteilig multiethylenisch ungesättigte Verbindungen im Zulauf verwendet werden. Unter IPN-Struktur versteht man ein Interpenetrating Network. Bei einem (echten) IPN durchdringen sich zwei Polymernetzwerke. Beim Semi-IPN durchdringen sich zwei Polymere von denen nur eines vernetzt ist.

Die Monodispersität der erfindungsgemäßen Polymerisate ist hoch. Unter Monodispersität im Sinne der vorliegenden Erfindung wird der prozentuale Anteil der Teilchen definiert, der sich über den Teilchendurchmesserbereich von 33 % unterhalb des mittleren Teilchendurchmessers bis 33 % oberhalb des mittleren Teilchendurchmessers erstreckt. Die Monodispersität beträgt mindestens 65 %, vorzugsweise mindestens 75 %, besonders bevorzugt mindestens 85 %.

Das Saat-Polymerisat wird in einer wäßrigen Phase suspendiert, wobei das Verhältnis von Polymerisat und Wasser weitgehend unkritisch ist. Es kann beispielsweise zwischen 2:1 und 1:20 liegen. Die Anwendung eines Hilfsmittels, z.B. eines Tensides oder eines Schutzkolloides ist an dieser Stelle nicht unbedingt notwendig, es können aber die unten genannten Schutzkolloide und Tenside angewendet werden. Es hat sich als besonders günstig herausgestellt, beim Dispergieren der Saat nur ein Teil z.B. 10 bis 50 % der Menge an Schutzkolloid einzusetzen, die für die nachfolgende Polymerisation verwendet wird. Der restliche Teil wird dann erst unmittelbar vor dem Einleiten der Polymerisation durch Temperaturerhöhung zugesetzt. Das Suspendieren kann z.B. mit Hilfe eines normalen Gitter- oder Blattrührers erfolgen, wobei niedrige bis mittlere Scherkräfte angewendet werden.

Zu dem suspendierten Saat-Polymerisat wird eine Mischung (Zulauf) aus Monomer, Initiator und gegebenenfalls weiteren Zusätzen hinzugegeben. Die Zugabe erfolgt beispielsweise bei Raumtemperatur, in jedem Falle aber bei einer Temperatur bei der der angewendete Initiator nicht aktiv ist.

Als Monomer sind die bereits obengenannten monoethylenisch ungesättigten Verbindungen und multiethylenisch ungesättigten Verbindungen, desweiteren Acrylsäure und Methacrylsäure geeignet. Besonders gut geeignet sind Styrol und (Meth)acrylsäureester, insbesondere Methylmethacrylat. Die Monomere bzw. die Monomergemische sollten in der Wasserphase weitgehend unlöslich sein. In Wasser teilweise lösliche Monomere, wie Acrylsäure, Methacrylsäure und Acrylnitril werden daher im Gemisch mit wasserunlöslichen Monomeren verwendet. Es ist auch möglich, die Löslichkeit der Monomeren in der Wasserphase durch Salzzusatz zu erniedrigen.

Für das erfindungsgemäße Verfahren geeignete Initiatoren sind vorzugsweise öllösliche Initiatoren. Beispielhaft seien genannt: Peroxyverbindungen wie Dibenzoylperoxid, Dilaurylperoxid, Bis(p-chlorbenzoylperoxid), Dicyclohexylperoxydicarbonat, tert.-Butylperoctoat, 2,5-Bis(2-ethylhexanoylperoxy)-2,5-dimethylhexan und tert.-Amylperoxy-2-ethylhexan, desweiteren Azoverbindungen wie 2,2'-Azobis(isobutyronitril) und 2,2'-Azobis(2-methylisobutyronitril). Die Initiatoren werden im allgemeinen in Mengen von 0,05 bis 2,5, vorzugsweise 0,2 bis 1,5 Gew.-%, bezogen auf das Monomer angewendet.

Als weitere Zusätze kann der Zulauf Stabilisatoren, wie Benzotriazolderivate oder geringe Mengen an Inhibitoren wie Hydrochinonmonomethylether enthalten.

Das Massen-Verhältnis von Saat-Polymerisat zu Zulauf (Saat/Zulauf-Verhältnis) beträgt im allgemeinen 1:1 bis 1:20, vorzugsweise 1:2 bis 1:10, besonders bevorzugt 1:2 bis 1:8. Bei gegebener Teilchengröße des als Saat eingesetzten vernetzten Polymerisat läßt sich durch das Saat-Zulauf-Verhältnis die Teilchengröße des Perlpolymerisats einstellen. Dies ist ein wesentlicher Vorteil gegenüber Direktsynthesen, bei denen in der Regel die exakte Einstellung einer vorgegebenen Teilchengröße sehr schwierig ist. Die maximale Zulauf-Menge, die von der Saat vollständig aufgenommen wird, wird durch den Quellungsindex der Saat festgelegt.

Die Polymerisation der gequollenen Saat zum Perlpolymerisat erfolgt in Anwesenheit eines oder mehrerer Schutzkolloide und gegebenenfalls eines Tensides. Als Schutzkolloide werden natürliche oder synthetische wasserlösliche Polymere, wie Gelatine, Stärke, Polyvinylalkohol, Polyvinylpyrrolidon, Polyacrylsäure, Polymethacrylsäure und Copolymerisate aus (Meth)acrylsäure und (Meth)acrylsäureestern, desweiteren wasserlösliche Copolymerisate mit Maleinsäureeinheiten angewendet werden. Geeignet sind auch Cellulosederivate, insbesondere Celluloseester und Celluloseether, wie Carboxymethylcellulose und Hydroxyethylcellulose. Bevorzugt wird Polyvinylpyrrolidon und Polyvinylalkohol. Die Einsatzmenge der Schutzkolloide beträgt im allgemeinen 0,05 bis 1 Gew.-%, bezogen auf die Wasserphase, vorzugsweise 0,1 bis 0,5 Gew.-%.

Vorzugsweise wird das erfindungsgemäße Verfahren in Anwesenheit eines Tensids durchgeführt. Das Tensid kann ionisch oder nichtionisch sein. Ionische Tenside werden bevorzugt. Beispiele für nichtionische Tenside sind die ethoxylierten Nonylphenole. Als anionische Tenside sind Alkylsulfonate und besonders die Natriumsalze von Sulfobernsteinsäureestern geeignet. N-Alkylammoniumsalze, wie z.B. Methyltricaprylammoniumchlorid seien als kationische Tenside genannt. Das Tensid wird in einer Menge von 0,05 bis 5 Gew.-%, vorzugsweise von 0,1 bis 1 Gew.-%, bezogen auf die Wasserphase, eingesetzt.

In einer bevorzugten Ausführungsform der vorliegenden Erfindung enthält die wäßrige Phase einen gelösten Polymerisationsinhibitor. Als Inhibitoren kommen sowohl anorganische als auch organische Stoffe in Frage. Beispiele für anorganische Inhibitoren sind z.B. Stickstoffverbindungen wie Hydroxylamin, Hydrazin, Natriumnitrit und Kaliumnitrit. Beispiele für organische Inhibitoren sind phenolische Verbindungen wie Hydrochinon, Hydrochinonmonomethylehter, Resorcin, Brenzkatechin, tert.-Butylbrenzkatechin, Kondensationsprodukte aus Phenolen mit Aldehyden. Weitere organische Inhibitoren sind stickstoffhaltige Verbindungen, wie z.B. Diethylhydroxylamin und Isopropylhydroxylamin. Die Konzentration des Inhibitors beträgt 5 bis 1.000 ppm (bezogen auf die wäßrige Phase), vorzugsweise 10 bis 500 ppm, besonders bevorzugt 20 bis 250 ppm.

Die Rührgeschwindigkeit bei der Polymerisation ist wenig kritisch und hat im Gegensatz zur herkömmlichen Perlpolymerisation keinen Einfluß auf die Teilchengröße. Es werden niedrige Rührgeschwindigkeiten angewendet, die ausreichen, die Teilchen der Suspension in Schwebe zu halten und die Abführung der Polymerisationswärme zu unterstützen.

Die Polymerisationstemperatur richtet sich nach der Zerfallstemperatur des eingesetzten Initiators. Sie liegt im allgemeinen zwischen 50 und 150°C, vorzugsweise zwischen 55 und 100°C. Die Polymerisation dauert 0,5 bis einige Stunden. Es hat sich bewährt, ein Temperaturprogramm anzuwenden, bei dem die Polymerisation bei niedriger Temperatur, z.B. 60°C, begonnen wird und mit fortschreitendem Polymerisationsumsatz die Reaktionstemperatur gesteigert wird. Auf diese Weise läßt sich z.B. die Forderung nach sicherem Reaktionsverlauf und hohem Polymerisationsumsatz sehr gut erfüllen. Nach der Polymerisation kann das Polymerisat mit üblichen Methoden, z.B. durch Filtrieren oder Dekantieren, isoliert und gegebenenfalls nach ein oder mehreren Wäschen getrocknet werden.

### Beispiele

### Referenzbeispiel 1

### Herstellung eines Saatpolymerisates

In einem Reaktionskolben m it Rückflußkühler, Rührer und Thermometer wurden 56 g Polyvinylpyrrolidon, 8 g Methyltricaprylammoniumchlorid und 0,64 g Azodiisobutyronitril in 1600 ml Methanol gelöst. Zu der Lösung wurde ein Gemisch aus 97,5 g Methylmethacrylat und 2,5 g γ-Methacryloxypropyl-trimethoxysilan gegeben. Das Gemisch wurde unter Rühren 5 Stunden erhitzt und anschließend auf 25°C abgekühlt. Danach wurden 100 ml In-HCl zugetropft. Es wurde noch eine weitere Stunde bei 25°C gerührt, anschließend wurde das Perlpolymerisat durch Zentrifugieren isoliert, mit Methanol gewaschen und bei 50°C getrocknet. Man erhielt 70 g eines monodispersen Perlpolymerisates. Die mittlere Teilchengröße betrug 3,8 m, der Quellungsindex 7,5 und der lösliche Anteil 15 %.

### Referenzbeispiel 2

### Herstellung eines Saatpolymerisates

In einem Reaktionskolben mit Rückflußkühler, Rührer und Thermometer wurden 75,6 g Polyvinylpyrrolidon, 10,8 g Methyltricaprylammoniumchlorid und 0,91 g Azodiisobutyronitril in einem Gemisch aus 1080 ml Ethanol und 1080 ml Isopropanol gelöst. Zu der Lösung wurde ein Gemisch aus 137,2 g Methylmethacrylat und 2,8 g γ-Methacryloxypropyl-trimethoxysilan gegeben. Das Gemisch wurde unter Rühren 5 Stunden erhitzt und anschließend auf 25°C abgekühlt. Danach wurden 100 ml ln-HCl zugetropft. Es wurde noch eine weitere Stunde bei 25°C gerührt, anschließend wurde das Perlpolymerisat durch Zentrifugieren isoliert, mit Methanol gewaschen und bei 50°C getrocknet. Man erhielt 78 g eines monodispersen Perlpolymerisates. Die mittlere Teilchengröße betrug 7,5 µm, der Quellungsindex 8,5 und der lösliche Anteil 17,5 %.

### Referenzbeispiel 3

### Herstellung eines Saatpolymerisates

In einem Reaktionskolben mit Rückflußkühler, Rührer und Thermometer wurden 8,2 g Polyvinylpyrrolidon, 32,8 g Nonylphenolpolyglykol (mit 6 Ethylenoxideinheiten) in einem Gemisch aus 4260 g Methanol und 2050 g entionisiertem Wasser gelöst. Zu der Lösung wurden 1600 g Methylmethacrylat zugegeben. Das Gemisch wurde unter Rühren auf 65°C erhitzt. Danach wurden 33 g gamma-Methacryloxypropyltrimethoxysilan und 8,2 g Natriumperoxydisulfat, gelöst in 33 g entionisiertem Wasser, zugesetzt und 24 Stunden bei 65°C gerührt. Das Reaktionsgemisch wurde auf 25°C abgekühlt. Aus der erhaltenen Dispersion wurde das Perlpolymerisat durch Zentrifugieren isoliert, mit Methanol gewaschen und bei 50°C getrocknet. Man erhielt ein monodisperses Perlpolymerisat mit einer mittleren Teilchengröße von 3,9 µm, einem Quellungsindex von 4,3 und einem löslichen Anteil von 2,8 %.

### Beispiel 4

### Erfindungsgemäßes Saat-Zulaufverfahren

In einem Reaktionskolben mit Rückflußkühler, Rührer und Thermometer wurden 43,8 g Saat-Polymerisat aus Referenz beispiel 1 in einer Mischung aus 1350 g entionisiertem Wasser, 6 g Polyvinylalkohol, 6 g Methyltricaprylammoniumchlorid und 0,2 g Diethylhydroxylamin dispergiert. Zu dieser Dispersion wurde ein Zulauf aus 135,8 g Methylmethacrylat und 1,81 g Dibenzoylperoxid innerhalb von einer Stunde bei Raumtemperatur zugetropft. Danach wurde das Reaktionsgemisch 10 Stunden lang bei Raumtemperatur und anschließend weitere 10 Stunden bei 75°C gerührt. Nach dem Abkühlen wurde das Perlpolymerisat durch Zentrifugieren isoliert, mit Methanol gewaschen und bei 50°C getrocknet. Die Ausbeute betrug 178 g, die mittlere Teilchengröße 6,0 µm.

### Beispiel 5

### Erfindungsgemäßes Saat-Zulaufverfahren

Beispiel 4 wurde wiederholt, wobei anstelle von 43,8 g Saat-Polymerisat aus Referenzbeispiel 1 22,6 g Saat-Polymerisat aus Referenzbeispiel2 eingesetzt wurde. Die Ausbeute betrug 158 g, die mittlere Teilchengröße 14,2 µm.

### Beispiel 6

### Erfindungsgemäßes Saat-Zulaufverfahren

In einem Reaktionskolben mit Rückflußkühler, Rührer und Thermometer wurden 50 g Saat-Polymerisat aus Referenzbeispiel 3 in einer Mischung aus 1320 g entionisiertem Wasser, 4,5 g Polyvinylpyrrolidon, 4,5 g Sulfobernsteinsäure-bis-(2-ethylhexylester)-Natriumsalz und 0,2 g Diethylhydroxylamin dispergiert. Zu dieser Dispersion wurde ein Zulauf aus 150 g Methylmethacrylat und 2 g Dibenzoylperoxid innerhalb von einer Stunde bei Raumtemperatur zugetropft. Danach wurde das Reaktionsgemisch 10 Stunden lang bei Raumtemperatur und anschließend weitere 10 Stunden bei 75°C gerührt. Nach dem Abkühlen wurde das Perlpolymerisat durch Zentrifugieren isoliert, mit Methanol gewaschen und bei 50°C getrocknet. Die Ausbeute betrug 198 g, die mittlere Teilchengröße 5,9 µm.

## Patentansprüche

1. Verfahren zur Herstellung von Perlpolymerisaten mit einer mittleren Teilchengröße von 1 bis 30 µm nach dem Saat-Zulauf-Verfahren, **dadurch gekennzeichnet, dass** man als Saat ein mit Si-O-Si-Gruppen vernetztes Polymerisat aus Vinylmonomeren mit einem löslichen Anteil von weniger als 25 Gew.-% und einer mittleren Teilchengröße von 0,5 bis 10 µm einsetzt.

2. Verfahren zur Herstellung von Perlpolymerisaten nach Anspruch 1, **dadurch gekennzeichnet, daß** der Zulauf, bestehend aus Monomer, Initiator und gegebenenfalls weiteren Zusätzen, bei einer Temperatur zugesetzt wird, bei der der Initiator nicht aktiv ist.

3. Verfahren zur Herstellung von Perlpolymerisaten nach Anspruch 1, **dadurch gekennzeichnet, daß** die Polymerisation in Anwesenheit eines Schutzkolloids und eines Tensids durchgeführt wird.

4. Verfahren zur Herstellung von Perlpolymerisaten nach Anspruch 1, **dadurch gekennzeichnet, daß** die Polymerisation in einer wäßrigen Phase, die einen gelösten Polymerisationsinhibitor enthält, durchgeführt wird.

5. Verfahren zur Herstellung von Perlpolymerisaten nach Anspruch 1, **dadurch gekennzeichnet, daß** der Zulauf Styrol und/oder (Meth)acrylester als Monomer enthält.

6. Verfahren nach Anspruch 1, **dadurch gekennzeichnet, daß** das Endprodukt einen um mindestens 20 % größeren Durchmesser aufweist als eingesetztes Saatpolymer.

## Revendications

1. Procédé pour la préparation de polymères sous forme de perles à une granulométrie moyenne de 1 à 30 *µ*m conformément à la technique par germes et par alimentation (seed/feed), **caractérisé en ce que** le germe utilisé est un polymère réticulé par des groupes Si--O--Si et issu de monomères vinyliques, présentant une fraction soluble inférieure à 25 % en poids et une granulométrie moyenne de 0,5 à 10 *µ*m.

2. Procédé pour la préparation de polymères sous forme de perles selon la revendication 1, **caractérisé en ce que** l'alimentation comportant monomère, amorceur et éventuellement des additifs supplémentaires est ajoutée à une température à laquelle l'amorceur n'est pas actif.

3. Procédé pour la préparation de polymères sous forme de perles selon la revendication 1, **caractérisé en ce que** la polymérisation s'effectue en présence d'un colloïde protecteur et d'un agent tensioactif.

4. Procédé pour la préparation de polymères sous forme de perles selon la revendication 1, **caractérisé en ce que** la polymérisation s'effectue dans une phase aqueuse contenant un agent inhibiteur de la polymérisation dissous.

5. Procédé pour la préparation de polymères sous forme de perles selon la revendication 1, **caractérisé en ce que** l'alimentation contient le styrène et/ou l'ester (méth)acrylique en tant que monomère.

6. Procédé selon la revendication 1, **caractérisé en ce que** le produit final présente un diamètre qui est au moins 20% plus grand que celui du germe polymère utilisé.

## Claims

1. Process for manufacturing bead polymers having an average particle size of 1 to 30 *µm* by the seed/feed process, **characterised in that** the seed used is a polymer crosslinked with Si--O--Si groups and composed of vinyl monomers, having a soluble fraction of less than 25 % by weight and an average particle size of 0.5 to 10 *µ*m.

2. Process for manufacturing bead polymers according to claim 1, **characterised in that** the feed comprising monomer, initiator and optionally further additives is added at a temperature at which the iniator is not active.

3. Process for manufacturing bead polymers according to claim 1, **characterised in that** the polymerisation is performed in the presence of a protective colloid and a surfactant.

4. Process for manufacturing bead polymers according to claim 1, **characterised in that** the polymerisation is performed in an aqueous phase which contains a dissolved polymerisation inhibitor.

5. Process for manufacturing bead polymers according to claim 1, **characterised in that** the feed contains styrene and/or (meth)acrylic ester as the monomer.

6. Process according to claim 1, **characterised in that** the final product has a diameter which is at least 20% larger than that of the seed polymer used.
